(19) Europäisches Patentamt
European Patent Office
Office européen des brevets

(11) **EP 3 796 425 A1**

(12) **EUROPEAN PATENT APPLICATION**
published in accordance with Art. 153(4) EPC

(43) Date of publication:
**24.03.2021 Bulletin 2021/12**

(21) Application number: **19802828.4**

(22) Date of filing: **08.05.2019**

(51) Int Cl.:
$H01M\ 4/13$ (2010.01) $\quad$ $H01M\ 4/131$ (2010.01)
$H01M\ 4/133$ (2010.01) $\quad$ $H01M\ 4/134$ (2010.01)
$H01M\ 4/48$ (2010.01) $\quad$ $H01M\ 4/505$ (2010.01)
$H01M\ 4/525$ (2010.01) $\quad$ $H01M\ 4/74$ (2006.01)
$H01M\ 4/80$ (2006.01)

(86) International application number:
**PCT/JP2019/018432**

(87) International publication number:
**WO 2019/220985 (21.11.2019 Gazette 2019/47)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.05.2018  JP 2018095343**

(71) Applicants:
• **HONDA MOTOR CO., LTD.**
  **Minato-ku**
  **Tokyo 107-8556 (JP)**
• **SUMITOMO ELECTRIC INDUSTRIES, LTD.**
  **Osaka-shi, Osaka 541-0041 (JP)**

(72) Inventors:
• **TANAAMI, Kiyoshi**
  **Wako-shi, Saitama 351-0193 (JP)**

• **TANAKA, Akihisa**
  **Wako-shi, Saitama 351-0193 (JP)**
• **AOYAGI, Shintaro**
  **Wako-shi, Saitama 351-0193 (JP)**
• **OKUNO, Kazuki**
  **Osaka-shi, Osaka 541-0041 (JP)**
• **HOSOE, Akihisa**
  **Osaka-shi, Osaka 541-0041 (JP)**
• **SENOO, Kikuo**
  **Osaka-shi, Osaka 541-0041 (JP)**
• **TAKEBAYASHI, Hiroshi**
  **Osaka-shi, Osaka 541-0041 (JP)**

(74) Representative: **Feller, Frank**
  **Weickmann & Weickmann**
  **Patent- und Rechtsanwälte PartmbB**
  **Postfach 860 820**
  **81635 München (DE)**

(54) **LITHIUM ION SECONDARY BATTERY ELECTRODE**

(57)  Provided is a lithium ion secondary battery electrode allowing excellent charge-and-discharge cycle characteristics to be obtained when used in a lithium ion secondary battery. The lithium ion secondary battery electrode includes a current collector composed of a metal porous body having a three-dimensional network structure in which columnar skeletons are three-dimensionally connected, a first active material held on one side of the current collector, and a second active material held on the other side of the current collector.

**EP 3 796 425 A1**

**(Cont. next page)**

FIG.1

**Description**

Technical Field

The present invention relates to a lithium ion secondary battery electrode.

Background Art

Conventionally, a lithium ion secondary battery electrode comprising two active material layers having different particle sizes of the active material and having a thickness in the range of 20 to 30 $\mu$m for each of the two active material layers has been known (for example, refer to Patent Literature 1).
According to the lithium ion secondary battery electrode described in Patent Literature 1, the lithium ion secondary battery using the same can improve the output density without lowering the energy density.

Citation List

Patent Literature

Patent Literature 1: Japanese Patent Laid-Open No. 2002-151055

Summary of the invention

Technical Problem

However, the lithium ion secondary battery electrode described in Patent Literature 1 has different expansion and contraction rates of the above two active material layers, and therefore there is an disadvantage of easily occurring slippage at the interface between the two active material layers due to repeated charge-and-discharge at a high rate when the above electrode is used in a lithium ion secondary battery, resulting in deterioration of charge-and-discharge cycle characteristics.
The object of the present invention is to eliminate such disadvantage and to provide a lithium ion secondary battery electrode comprising two active materials, allowing excellent charge-and-discharge cycle characteristics to be obtained when used in a lithium ion secondary battery.

Solution to Problem

In order to achieve such object, a lithium ion secondary battery electrode of the present invention comprises a current collector composed of a metal porous body having a three-dimensional network structure, a first active material held on one side of the current collector, and a second active material held on the other side of the current collector.
The first active material is held on one side of the current collector and the second active material is held on the other side of the current collector, and therefore the lithium ion secondary battery electrode of the present invention can suppress the occurrence of slippage at the interface between the first active material and the second active material when used in a lithium ion secondary battery. Therefore, the lithium ion secondary battery electrode of the present invention can obtain excellent charge-and-discharge cycle characteristics when used in a lithium ion secondary battery.
In the lithium ion secondary battery electrode of the present invention, preferably the first active material includes a high-capacity active material and the second active material includes a high-power active material. In the lithium ion secondary battery electrode of the present invention, the first active material includes a high-capacity active material, while the second active material includes a high-power active material, thereby allowing both the energy density and the power density to be improved.
In addition, in the lithium ion secondary battery electrode of the present invention, when the first active material includes a high-capacity active material and the second active material includes a high-power active material, the thickness of the first active material held on one side of the current collector is preferably larger than the thickness of the second active material held on the other side of the current collector. According to the lithium ion secondary battery electrode of the present invention, the thickness of the first active material is larger than the thickness of the second active material, thereby allowing the capacity of the electrode as a whole to be improved without loss of the output density of the second active material, and further allowing the energy density to be improved.
In addition, for the lithium ion secondary battery electrode of the present invention, the high-capacity active material may be one composite metal oxide selected from the group consisting of $Li(Ni_{5/10}Co_{2/10}Mn_{3/10})O_2$, $Li(Ni_{6/10}Co_{2/10}Mn_{2/10})O_2$, $Li(Ni_{8/10}Co_{1/10}Mn_{1/10})O_2$, and $Li(Ni_{0.8}Co_{0.15}Al_{0.05})O_2$, and the high-power active material may be one complex metal oxide selected from the group consisting of $Li(Ni_{1/6}Co_{4/6}Mn_{1/6})O_2$ and $Li(Ni_{1/3}Co_{1/3}Mn_{1/3})O_2$.

In addition, for the lithium ion secondary battery electrode of the present invention, the high-capacity active material may be one material selected from the group consisting of artificial graphite, natural graphite, Si, and SiO, and the high-power active material may be hard carbon.

The lithium ion secondary battery electrode of the present invention uses any one of the above combinations of the above high-capacity active materials and the above high-power active materials, thereby allowing both the energy density and the power density to be more reliably improved.

Brief Description of the Drawings

FIG. 1 is a graph showing change in capacity retention rate with the number of cycles in the lithium ion secondary battery using the electrode according to one embodiment of the present invention.

FIG. 2 is a graph showing change in internal resistance with the number of cycles in the lithium ion secondary battery using the electrode according to one embodiment of the present invention.

FIG. 3 is a graph showing the energy density in the lithium ion secondary battery using the electrode according to one embodiment of the present invention.

FIG. 4 is a graph showing the output density in the lithium ion secondary battery using the electrode according to one embodiment of the present invention.

FIG. 5 is a graph showing change in capacity retention rate with the number of cycles in the lithium ion secondary battery using the electrode according to the other embodiment of the present invention.

FIG. 6 is a graph showing change in internal resistance with the number of cycles in the lithium ion secondary battery using the electrode according to the other embodiment of the present invention.

FIG. 7 is a graph showing the energy density in the lithium ion secondary battery using the electrode according to the other embodiment of the present invention.

FIG. 8 is a graph showing the output density in the lithium ion secondary battery using the electrode according to the other embodiment of the present invention.

Description of Embodiments

Hereinafter, embodiments of the present invention will be described in more detail with reference to the accompanying drawings.

The lithium ion secondary battery electrode of the present embodiment comprises a current collector composed of a metal porous body having a three-dimensional network structure, the first active material held on one side of the above current collector, and the second active material held on the other side of the above current collector.

As the above metal porous body, those that can be suitably used are made of a conductive metal such as aluminum, nickel, copper, stainless steel, or titanium, and have a porosity of 90 to 98%, a number of pores (cells) of 46 to 50/inch, a pore diameter of 0.4 to 0.6 mm, a specific surface area of 4500 to 5500 $m^2/m^3$, and a thickness of 0.8 to 1.2 mm. The above metal porous body is preferably made of aluminum when used as a positive electrode current collector, and is preferably made of copper when used as a negative electrode current collector.

The above metal porous body made of aluminum can be produced by applying carbon paint to an urethane foam with open cells to perform a conductive treatment, using a plating bath including 1-ethyl-3-methylimidazolium chloride and aluminum chloride ($AlCl_3$) in a molar ratio of 33:67 and further including a small amount of phenanthroline to perform electroplating in an inert atmosphere to form a predetermined amount of aluminum layer, and thermally decomposing and removing the urethane foam and carbon paint under the condition where excessive oxidation of the aluminum surface is suppressed in an oxygen-containing atmosphere at a temperature in the range of 500 to 660°C. In addition, the above metal porous body made of copper can be produced by applying carbon paint to an urethane foam with open cells to perform a conductive treatment, forming a predetermined amount of copper layer, thermally decomposing and removing the urethane foam and carbon paint, and reducing the oxidized copper layer under hydrogen gas atmosphere. As the metal porous body produced in this manner, "Aluminum Celmet" (registered trademark) manufactured by Sumitomo Electric Industries, Ltd. or "Celmet" (registered trademark) of copper or nickel can be used.

In the above lithium ion secondary battery electrode, the above first active material can include a high-capacity active material and the above second active material can include a high-power active material. In addition, in the above lithium ion secondary battery electrode, the thickness of the first active material held on one side of the above current collector is preferably larger than the thickness of the second active material held on the other side of the above current collector. In this case, specifically, the above first active material preferably has a thickness in the range of 100 to 250 $\mu$m, and the above second active material preferably has a thickness in the range of 50 to 150 $\mu$m.

In the lithium ion secondary battery electrode of the present embodiment, the above high-capacity active material that can be used is at least one composite metal oxide selected from the group consisting of, for example, $Li(Ni_{5/10}Co_{2/10}Mn_{3/10})O_2$, $Li(Ni_{6/10}Co_{2/10}Mn_{2/10})O_2$, $Li(Ni_{8/10}Co_{1/10}Mn_{1/10})O_2$, and $Li(Ni_{0.8}Co_{0.15}Al_{0.05})O_2$. In this case, as the above high-power active material, it is also possible to use at least one composite metal oxide selected from the group consisting of, for example, $Li(Ni_{1/6}Co_{4/6}Mn_{1/6})O_2$, $Li(Ni_{1/3}Co_{1/3}Mn_{1/3})O_2$, $LiCoO_2$, and $LiNiO_2$.

In addition, as the above high-capacity active material, it is possible to use at least one material selected from the group consisting of, for example, artificial graphite, natural graphite, Si, and SiO. In this case, as the above high-power active material, it is possible to use at least one material selected from the group consisting of, for example, hard carbon or soft carbon.

A method for producing the lithium ion secondary battery electrode of the present embodiment will be described.

When the lithium ion secondary battery electrode of the present embodiment is a positive electrode of a lithium ion secondary battery, a slurry for the first active material is prepared by mixing one composite metal oxide selected from the group consisting of $Li(Ni_{5/10}Co_{2/10}Mn_{3/10})O_2$, $Li(Ni_{6/10}Co_{2/10}Mn_{2/10})O_2$, $Li(Ni_{8/10}Co_{1/10}Mn_{1/10})O_2$, and $Li(Ni_{0.8}Co_{0.15}Al_{0.05})O_2$ as a high-capacity active material, polyvinylidene fluoride (PVDF) as a binder, and carbon black as a conductive aid in a mass ratio of high-capacity active material:binder:conductive aid = 80 to 99:0.5 to 19.5:0.5 to 19.5 so as to obtain a total amount of 100, and then by diluting with an organic solvent such as N-methylpyrrolidone.

A slurry for the second active material is prepared by mixing one composite metal oxide selected from the group consisting of $Li(Ni_{1/6}Co_{4/6}Mn_{1/6})O_2$ and $Li(Ni_{1/3}Co_{1/3}Mn_{1/3})O_2$ as a high-power active material, polyvinylidene fluoride (PVDF) as a binder, and carbon black as a conductive aid in a mass ratio of high-power active material:binder:conductive aid = 80 to 99:0.5 to 19.5:0.5 to 19.5 so as to obtain a total amount of 100, and then by diluting with an organic solvent such as N-methylpyrrolidone.

Subsequently, the above slurry for the first active material is applied to one side of the current collector composed of the above metal porous body by, for example, extruding from a nozzle at a predetermined pressure. The current collector composed of the above metal porous body having the above slurry for the first active material applied thereto is dried in the atmosphere at a temperature in the range of 90 to 130°C for 0.5 to 3 hours. The above slurry for the second active material is applied to the other side of the current collector composed of the above metal porous body by, for example, extruding from a nozzle at a predetermined pressure.

A current collector composed of the above metal porous body having the above slurry for the first active material and the above slurry for the second active material applied thereto is dried in the atmosphere at a temperature in the range of 90 to 130°C for 0.5 to 3 hours to form the first active material held on one side of the current collector and the second active material held on the other side, and is roll-pressed so that each of the active materials has a predetermined density. A positive electrode is obtained by drying in vacuum at a temperature in the range of 110 to 130°C for 11 to 13 hours.

In addition, when the lithium ion secondary battery electrode of the present embodiment is a negative electrode of a lithium ion secondary battery, a slurry for the first active material is prepared by mixing at least one material selected from the group consisting of artificial graphite, natural graphite, Si, and SiO as a high-capacity active material, at least one compound selected from the group consisting of carboxymethyl cellulose, styrene-butadiene rubber, sodium polyacrylate, and polyvinylidene fluoride as a binder, and carbon black as a conductive aid in a mass ratio of high-capacity active material:binder:conductive aid = 80 to 99.5:0 to 10:5 to 20 so as to obtain a total amount of 100, and then by diluting with organic solvent such as N-methylpyrrolidone or pure water.

A slurry for the second active material is prepared by mixing hard carbon as a high-power active material, at least one compound selected from the group consisting of carboxymethyl cellulose, styrene-butadiene rubber, sodium polyacrylate, and polyvinylidene fluoride as a binder, and carbon black as a conductive aid in a mass ratio of high-power active material:binder:conductive aid = 80 to 99.5:0 to 10:5 to 20 so as to obtain a total amount of 100, and then by diluting with organic solvent such as N-methylpyrrolidone or pure water.

In exactly the same manner as in the positive electrode, except for using the above slurry for the first active material and the above slurry for the second active material prepared for a negative electrode instead of the above slurry for the first active material and the above slurry for the second active material prepared for a positive electrode, a negative electrode is obtained by applying the slurries to the current collector composed of the above metal porous body, drying in the atmosphere, roll-pressing, and further drying in vacuum.

The lithium ion secondary battery of the present embodiment can be produced by using the above lithium ion secondary battery electrode as a positive electrode or a negative electrode, sandwiching a separator between the positive electrode and the negative electrode, impregnating the separator with an electrolytic solution, and then sealing the container.

In the lithium ion secondary battery of the present embodiment, when the above lithium ion secondary battery electrode is a positive electrode, it is possible to use, for example, graphite, hard carbon, soft carbon, Si, SiO, and metallic lithium as a negative electrode active material. On the other hand, when the above lithium ion secondary battery electrode is a negative electrode, it is possible to use, for example, $Li(Ni_{5/10}Co_{2/10}Mn_{3/10})O_2$, $Li(Ni_{6/10}Co_{2/10}Mn_{2/10})O_2$,

$Li(Ni_{8/10}Co_{1/10}Mn_{1/10})O_2$, $Li(Ni_{0.8}Co_{0.15}Al_{0.05})O_2$, $Li(Ni_{1/6}Co_{4/6}Mn_{1/6})O_2$, $Li(Ni_{1/3}Co_{1/3}Mn_{1/3})O_2$, $LiCoO_2$, $LiNiO_2$, $LiMnO_2$, and $LiMn_2O_4$ as a positive electrode active material.

In addition, as the above separator, a microporous film made of, for example, polyethylene or polypropylene can be used.

In addition, examples of the above electrolytic solution which can be used include those obtained by dissolving supporting salts such as $LiPF_6$, $LiBF_4$, or $LiClO_4$ in a solvent such as ethylene carbonate, propylene carbonate, dimethyl carbonate, diethyl carbonate, or ethyl methyl carbonate at a concentration in the range of 0. 1 to 3 mol/L, preferably in the range of 0.6 to 1.5 mol/L.

Examples and Comparative Examples of the present invention will be shown as follows.

Examples

[Example 1]

In the present Example, the positive electrode was prepared by using those made of aluminum and having a porosity of 95%, a number of pores (cells) of 46 to 50/inch, a pore diameter of 0.5 mm, a specific surface area of 5000 $m^2/m^3$, a thickness of 1.0 mm, a length of 150 mm, and a width of 200 mm (Celmet (registered trademark) manufactured by Sumitomo Electric Industries, Ltd.) as a current collector composed of a metal porous body having a three-dimensional network structure in which columnar skeletons are three-dimensionally connected (hereinafter abbreviated as "three-dimensional skeleton current collector").

The slurry for the first positive electrode active material including a high-capacity positive electrode active material was applied to an area of 80 mm in length and 150 mm in width at the center of one side of the above three-dimensional skeleton current collector. Subsequently, the slurry for the second positive electrode active material including a high-power positive electrode active material was applied to an area corresponding to the area to which the above slurry for the first positive electrode active material was applied, on the other side of the above three-dimensional skeleton current collector.

The above slurry for the first positive electrode active material was prepared by weighing $Li(Ni_{5/10}Co_{2/10}Mn_{3/10})O_2$ as a high-capacity active material, polyvinylidene fluoride (PVDF) as a binder, and carbon black as a conductive aid so that a mass ratio of high-capacity active material:binder:conductive aid was 94:2:4 and by mixing them in N-methylpyrrolidone. In addition, the above slurry for the second positive electrode active material was prepared by weighing $Li(Ni_{1/6}Co_{4/6}Mn_{1/6})O_2$ as a high-power active material, polyvinylidene fluoride (PVDF) as a binder, and carbon black as a conductive aid so that a mass ratio of high-power active material:binder:conductivee aid was 94:2:4 and by mixing them in N-methylpyrrolidone.

The above three-dimensional skeleton current collector obtained by applying the above slurry for the first positive electrode active material to one side and applying the above slurry for the second positive electrode active material to the other side was dried in the atmosphere at a temperature of 120°C for 12 hours, roll-pressed, and further dried in vacuum at a temperature of 120°C for 12 hours.

The positive electrode of the present Example was obtained by punching into a shape having: a coating area of 30 mm in length and 40 mm in width having the above slurry for the first positive electrode active material and the above slurry for the second positive electrode active material applied thereto; and a tab area of 15 mm in length and 30 mm width not having the above slurry for the first positive electrode active material and the above slurry for the second positive electrode active material applied thereto, in contact with the coating area.

In the positive electrode, the first positive electrode active material formed of the above slurry for the first positive electrode active material is held on one side of the above three-dimensional skeleton current collector, and the second positive electrode active material formed of the above slurry for the second positive electrode active material is held on the other side. In the present Example, the above first positive electrode active material corresponds to the first active material of the present invention, and the above second positive electrode active material corresponds to the second active material of the present invention.

In the present Example, the above first positive electrode active material held on one side of the above three-dimensional skeleton current collector had a thickness of 0.225 mm and a volume density of 3.2 $g/cm^3$. In addition, the second positive electrode active material held on the other side of the above three-dimensional skeleton current collector had a thickness of 0.056 mm and a volume density of 3.2 $g/cm^3$.

A negative electrode was prepared as follows by using a copper foil having a width of 20 cm, a length of 1 m, and a thickness of 8 $\mu$m.

The slurry for the negative electrode active material was applied to 10 cm center area of the above copper foil, dried at a temperature of 135°C for 10 minutes, and pressed with a load of 5 tons by using a roll press at a temperature of 25°C, thereby forming a negative electrode active material layer. The above slurry for the negative electrode active material was prepared by weighing graphite as a negative electrode active material, a mixture of carboxymethyl cellulose and styrene-butadiene rubber as a binder, and carbon black as a conductive aid so that a mass ratio of negative electrode active material:binder:conductive aid was 96.5:2.5:1, and then by mixing them in pure water.

A negative electrode was obtained by punching the above copper foil having the above slurry for the negative electrode active material applied thereto into a shape having a coating area of 34 mm in length and 44 mm in width and a tab area of 15 mm in length and 30 mm in width, in contact with the coating area.

In the pouch of the aluminum laminate, a lithium ion secondary battery was produced by arranging the negative electrodes on both sides of the positive electrode, sandwiching a separator between the positive electrode and the negative electrode, exposing the above tab area outside the pouch, impregnating the separator with an electrolytic solution, and then vacuum sealing. The above positive electrode was arranged so that the second positive electrode active material including a high-power active material faced the separator.

As the above separator, a polyethylene microporous film having a thickness of 15 $\mu$m was used. In addition, as the above electrolytic solution, used were those obtained by dissolving $LiPF_6$ as a supporting salt at a concentration of 1.2 mol/L in a mixed solvent that had been mixed with ethylene carbonate, dimethyl carbonate, and diethyl carbonate in a volume ratio of 40:30:30.

<Evaluation of Durability: Capacity Retention Rate>

For the lithium ion secondary battery produced in the present Example, the temporary capacity of the positive electrode at a temperature of 25°C was calculated from the amounts of the active materials of the above first positive electrode active material and the above second positive electrode active material. Based on the above temporary capacity, a current value capable of discharging in 5 hours (0.2 C) was determined.

The lithium ion secondary battery produced in the present Example was subjected to constant current charging at 0.2 C to 4.2 V, constant voltage charging at 4.2 V for 1 hour, and then constant current discharging to 2.4 V at 0.2 C. The capacity at the time of the above constant current discharge was defined as the rated capacity (mAh/g).

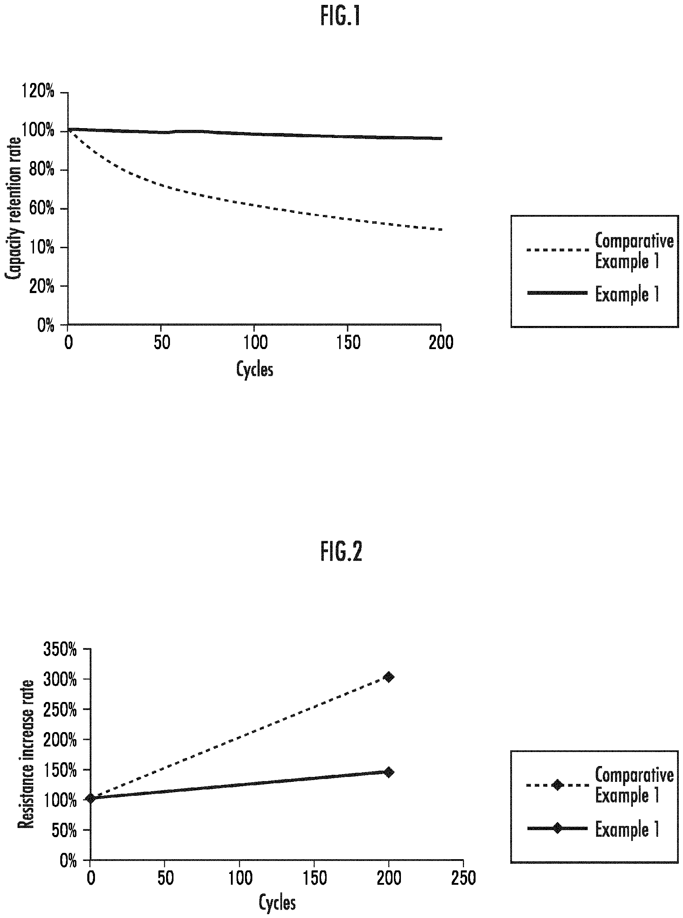

An operation during one cycle was defined as constant-current charging at 0.5 C to 4.2 V and then constant-current discharging at 0.5 C to 2.4 V for the above rated capacity, and such operation was repeated at 45°C for 200 cycles. FIG. 1 shows changes in the capacity retention rate with respect to the number of cycles.

<Evaluation of Durability: Resistance Increase Rate>

For the lithium ion secondary battery produced in the present Example, the internal resistance before the start of the above operation (0 cycle) and after 200 cycles was measured at the time of measuring the above capacity retention rate. The results are shown in FIG. 2.

<Calculation of Energy Density>

In the charge-and-discharge curve during constant current discharging when determining the above rated capacity, the voltage at a capacity of 1/2 of the rated capacity is defined as the average voltage (V), and the energy density (Wh/g) was calculated by the following equation (1) from the rated capacity and the average voltage.

$$\text{Energy density (Wh/g)} = \text{Rated capacity (mAh/g)} \times \text{Average voltage (V)} \quad (1)$$

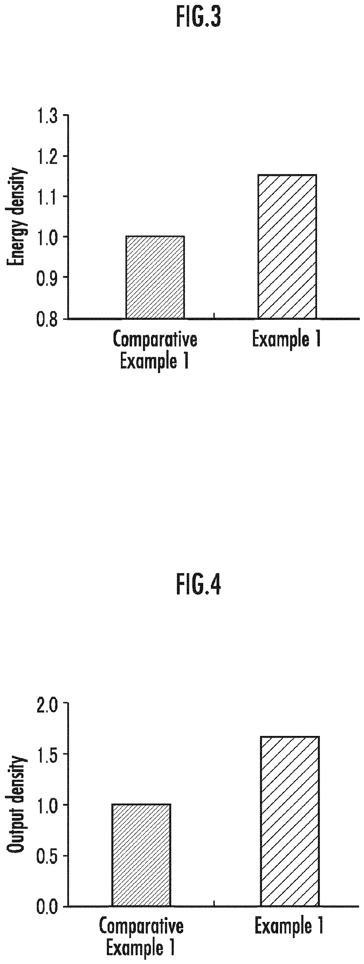

The results are shown in FIG. 3. In FIG. 3, the energy density (Wh/g) in the lithium ion secondary battery of Comparative Example 1 described below is set to 1 and the ratio value respective to this is shown.

<Calculation of Output Density>

In order to obtain a capacity having a charging rate (SOC) of 50% with respect to the above rated current at a temperature of 25°C, charging was performed at 0.2 C for 2.5 hours, and the open circuit voltage (OCV) at this time was defined as Eo.

Discharging was performed at a predetermined current value for 10 seconds while measuring the voltage, and then the discharge capacity was charged at 0.2 C, and such operation was repeated with changing the predetermined current value from 0.5 C to 3.0 C by 0.5 C. The current value was plotted on the horizontal axis and the voltage for each current value was plotted on the vertical axis, and the slope of the straight line obtained was the resistance R.

The cutoff voltage $E_{cutoff}$ was set to 2.4 V, and the above resistance R and the above open circuit voltage $E_0$ were used to calculate the output density W from the following equation (2).

$$W = (|E_{cutoff} - E_0|/R) \times E_{cutoff} \qquad (2)$$

The results are shown in FIG. 4. In FIG. 4, the energy density in the lithium ion secondary battery of Comparative Example 1 described below is set to 1 and the ratio value respective to this is shown.

[Comparative Example 1]

In the present Comparative Example, a positive electrode was prepared as follows by using an aluminum foil having a width of 20 cm, a length of 1 m, and a thickness of 15 $\mu$m.
The slurry for the first positive electrode active material including a high-capacity positive electrode active material was applied to 10 cm center area of the aluminum foil, dried at a temperature of 130°C for 10 minutes, and pressed with a load of 15 tons by using a roll press at a temperature of 130°C, thereby forming the first positive electrode active material layer. The above slurry for the first positive electrode active material was prepared in exactly the same manner as in the slurry for the first positive electrode active material of Example 1, except for weighing in a mass ratio of high-capacity active material:binder:conductive aid = 95:2.5:2.5.
The slurry for the second positive electrode active material including a high-power positive electrode active material was applied on the above first positive electrode active material layer, dried at a temperature of 130°C for 10 minutes, and pressed with a load of 5 tons by using a roll press at a temperature of 130°C, thereby forming the second positive electrode active material layer. The above slurry for the second positive electrode active material was prepared in exactly the same manner as in the slurry for the second positive electrode active material of Example 1, except for weighing in a mass ratio of high-power active material:binder:conductive aid = 95:2.5:2.5.
A positive electrode was obtained by punching the above aluminum foil into a shape having a coating area of 30 mm in length and 40 mm in width and a tab area of 15 mm in length and 30 mm in width adjacent to the coating area.
In the present Comparative Example, the above first positive electrode active material layer had a thickness of 0.042 mm and a volume density of 3.30 g/cm$^3$. In addition, the above second positive electrode active material layer had a thickness of 0.016 mm and a volume density of 2.65 g/cm$^3$.
A lithium ion secondary battery was produced in exactly the same manner as in Example 1 except that the positive electrode obtained in the present Comparative Example was used.
The durability was evaluated in exactly the same manner as in Example 1 except that the lithium ion secondary battery obtained in the present Comparative Example was used. The change in the capacity retention rate with respect to the number of cycles is shown in FIG. 1, and the internal resistances before the start of operation (0 cycle) and after 200 cycles when measuring the capacity retention rate were shown in FIG. 2 as the resistance increase rate.
The energy density and the output density were calculated in exactly the same manner as in Example 1 except that the lithium ion secondary battery obtained in the present Comparative Example was used. The energy density is shown in FIG. 3 and the output density is shown in FIG. 4.
It is clear from FIG.s 1 to 4 that the lithium ion secondary battery of Example 1 has excellent charge-and-discharge cycle characteristics as well as excellent energy density and output density as compared with the lithium ion secondary battery of Comparative Example 1.

[Example 2]

In the present Example, a negative electrode was prepared as follows by using those made of copper and having a porosity of 95%, a number of pores (cells) of 46 to 50/inch, a pore diameter of 0.5 mm, a specific surface area of 5000 m$^2$/m$^3$, a thickness of 1.0 mm, a length of 150 mm, and a width of 200 mm (Celmet (registered trademark) manufactured by Sumitomo Electric Industries, Ltd.) as a three-dimensional skeleton current collector.
The slurry for the first negative electrode active material including a high-capacity active material was applied to an area of 80 mm in length and 150 mm in width at the center of one side of the above three-dimensional skeleton current collector. Subsequently, the slurry for the second negative electrode active material including a high-power active material was applied to an area corresponding to the area to which the above slurry for the first negative electrode active material was applied on the other side of the above three-dimensional skeleton current collector.
The above slurry for the first negative electrode active material was prepared by weighing natural graphite as a high-capacity active material, a mixture of carboxymethyl cellulose and styrene-butadiene rubber as a binder, and carbon black as a conductive aid so that a mass ratio of high-capacity active material:binder:conductive aid was 96.5:2.5:1, and then by mixing them in pure water. In addition, the above slurry for the second negative electrode active material was prepared without a conductive aid by weighing hard carbon as a high-power active material and a mixture of carboxymethyl cellulose and styrene-butadiene rubber as a binder so that a mass ratio of high-power active material:binder was 98:2, and then by mixing them in pure water.

The above three-dimensional skeleton current collector obtained by applying the above slurry for the first negative electrode active material to one side and applying the above slurry for the second negative electrode active material to the other side was dried in the atmosphere at a temperature of 120°C for 12 hours, roll-pressed, and further dried in vacuum at a temperature of 120°C for 12 hours.

The negative electrode of the present Example was obtained by punching into a shape having: a coating area of 34 mm in length and 44 mm in width having the above slurry for the first negative electrode active material and the above slurry for the second negative electrode active material applied thereto; and a tab area of 15 mm in length and 30 mm in width not having the above slurry for the first negative electrode active material and the above slurry for the second negative electrode active material applied thereto, in contact with the coating area.

In the above negative electrode, the first negative electrode active material formed of the above slurry for the first negative electrode active material was held on one side of the above three-dimensional skeleton current collector, and the second negative electrode active material formed of the above slurry for the second negative electrode active material was held on the other side. In the present Example, the above first negative electrode active material corresponds to the first active material of the present invention, and the above second negative electrode active material corresponds to the second active material of the present invention.

In the present Example, the above first negative electrode active material held on one side of the above three-dimensional skeleton current collector had a thickness of 0.212 mm and a volume density of 1.7 g/cm$^3$. In addition, the above second negative electrode active material held on one side of the above three-dimensional skeleton current collector had a thickness of 0.082 mm and a volume density of 1.1 g/cm$^3$.

A positive electrode was prepared as follows by using an aluminum foil having a width of 20 cm, a length of 1 m, and a thickness of 10 $\mu$m.

The slurry for the positive electrode active material was applied to 10 cm center area of the above aluminum foil, dried at a temperature of 135°C for 10 minutes, and then pressed with a load of 15 tons by using a roll press at a temperature of 25°C, thereby forming a positive electrode active material layer. The above slurry for the positive electrode active material was prepared by weighing $Li(Ni_{5/10}Co_{2/10}Mn_{3/10})O_2$ as a positive electrode active material, polyvinylidene fluoride (PVDF) as a binder, and carbon black as a conductive aid so that a mass ratio of positive electrode active material:binder: conductive aid was 95:2.5:2.5 and then by mixing them in N-methylpyrrolidone.

A positive electrode was obtained by punching the aluminum foil having the above slurry for the positive electrode active material applied thereto into a shape having a coating area of 30 mm in length and 40 mm in width and a tab area of 15 mm in length and 30 mm in width, in contact with the coating area.

The lithium ion secondary battery was produced in exactly the same manner as in Example 1 except that the above positive electrode and the above negative electrode obtained in the present Example were used. The above negative electrode was arranged so that the second negative electrode active material including a high-power active material faced the above separator.

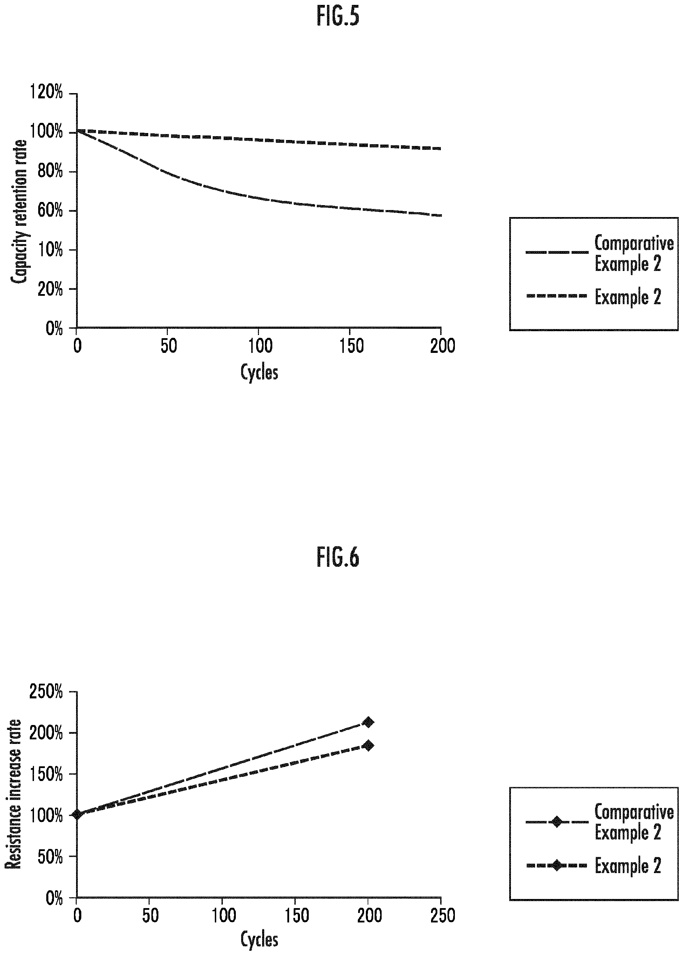

The durability was evaluated in exactly the same manner as in Example 1 except that the lithium ion secondary battery obtained in the present Example was used. The change in the capacity retention rate with respect to the number of cycles is shown in FIG. 5, and the internal resistances before the start of operation (0 cycle) and after 200 cycles when measuring the capacity retention rate are shown in FIG. 6 as the resistance increase rate.

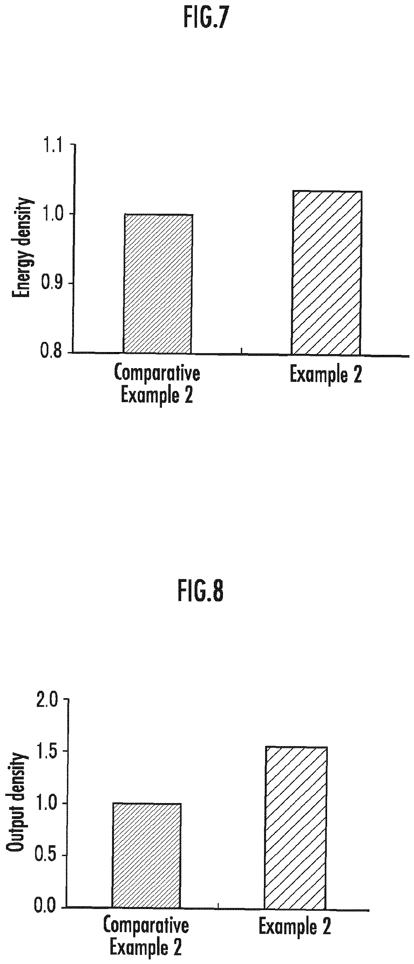

The energy density and the output density were calculated in exactly the same manner as in Example 1 except that the lithium ion secondary battery obtained in the present Example was used. The energy density is shown in FIG. 7 and the output density is shown in FIG. 8.

[Comparative Example 2]

In the present Comparative Example, a negative electrode was prepared as follows by using a copper foil having a width of 20 cm, a length of 1 m, and a thickness of 8 $\mu$m.

The slurry for the first negative electrode active material including a high-capacity negative electrode active material was applied to 10 cm center area of the above copper foil, dried at a temperature of 130°C for 10 minutes, and pressed with a load of 15 tons by using a roll press at a temperature of 130°C, thereby forming the first negative electrode active material layer. The above slurry for the first negative electrode active material was prepared by weighing natural graphite as a high-capacity active material, a mixture of carboxymethyl cellulose and styrene-butadiene rubber as a binder, and carbon black as a conductive aid so that a mass ratio of high-capacity active material:binder:conductive aid was 96.5:2.5:1, and then by mixing them in pure water.

The slurry for the second negative electrode active material including a high-power negative electrode active material was applied on the above first negative electrode active material layer, dried at a temperature of 130°C for 10 minutes, and pressed with a load of 5 tons by using a roll press at a temperature of 130°C, thereby forming the second negative electrode active material layer. The above slurry for the second negative electrode active material was prepared without a conductive aid by weighing hard carbon as a high-power active material and a mixture of carboxymethyl cellulose and styrene-butadiene rubber as a binder so that a mass ratio of high-power active material:binder was 98:2, and then by mixing them in pure water.

A negative electrode was obtained by punching the above copper foil into a shape having a coating area of 34 mm in length and 44 mm in width and a tab area of 15 mm in length and 30 mm in width adjacent to the coating area.

In the present Comparative Example, the above first negative electrode active material layer had a thickness of 0.039 mm and a volume density of 1.55 g/cm$^3$. In addition, the above second negative electrode active material layer had a thickness of 0.024 mm and a volume density of 1.00 g/cm$^3$.

A lithium ion secondary battery was produced in exactly the same manner as in Example 2 except that the negative electrode obtained in the present Comparative Example was used.

The durability was evaluated in exactly the same manner as in Example 1 except that the lithium ion secondary battery obtained in the present Comparative Example was used. The change in the capacity retention rate with respect to the number of cycles is shown in FIG. 5, and the internal resistances before the start of operation (0 cycle) and after 200 cycles when measuring the capacity retention rate are shown in FIG. 6 as the resistance increase rate.

The energy density and the output density were calculated in exactly the same manner as in Example 1 except that the lithium ion secondary battery obtained in the present Comparative Example was used. The energy density is shown in FIG. 7 and the output density is shown in FIG. 8.

It is clear from FIG.s 5 to 8 that the lithium ion secondary battery of Example 2 has excellent charge-and-discharge cycle characteristics as well as excellent energy density and output density as compared with the lithium ion secondary battery of Comparative Example 2.

Reference Signs List

None.

**Claims**

1. A lithium ion secondary battery electrode comprising:

   a current collector composed of a metal porous body having a three-dimensional network structure;
   a first active material held on one side of the current collector; and
   a second active material held on the other side of the current collector.

2. The lithium ion secondary battery electrode according to claim 1, wherein the first active material comprises a high-capacity active material and the second active material comprises a high-power active material.

3. The lithium ion secondary battery electrode according to claim 2, wherein a thickness of the first active material held on one side of the current collector is larger than a thickness of the second active material held on the other side of the current collector.

4. The lithium ion secondary battery electrode according to claim 2, wherein the high-capacity active material comprises at least one composite metal oxide selected from a group consisting of $Li(Ni_{5/10}Co_{2/10}Mn_{3/10})O_2$, $Li(Ni_{6/10}Co_{2/10}Mn_{2/10})O_2$, $Li(Ni_{8/10}Co_{1/10}Mn_{1/10})O_2$, and $Li(Ni_{0.8}Co_{0.15}Al_{0.05})O_2$, and the high-power active material comprises at least one composite metal oxide selected from a group consisting of $Li(Ni_{1/6}Co_{4/6}Mn_{1/6})O_2$ and $Li(Ni_{1/3}Co_{1/3}Mn_{1/3})O_2$.

5. The lithium ion secondary battery electrode according to claim 2, wherein the high-capacity active material comprises at least one material selected from a group consisting of artificial graphite, natural graphite, Si, and SiO, and the high-power active material comprises hard carbon.

## FIG.1

## FIG.2

# FIG.3

# FIG.4

# FIG.5

# FIG.6

## FIG.7

## FIG.8

## INTERNATIONAL SEARCH REPORT

| International application No. |
| --- |
| PCT/JP2019/018432 |

**A. CLASSIFICATION OF SUBJECT MATTER**

Int.Cl.   H01M4/13(2010.01)i,   H01M4/131(2010.01)i,   H01M4/133(2010.01)i,
H01M4/134(2010.01)i,   H01M4/48(2010.01)i,   H01M4/505(2010.01)i,
H01M4/525(2010.01)i, H01M4/74(2006.01)i, H01M4/80(2006.01)i

According to International Patent Classification (IPC) or to both national classification and IPC

**B. FIELDS SEARCHED**

Minimum documentation searched (classification system followed by classification symbols)

Int.Cl.      H01M4/13, H01M4/131, H01M4/133, H01M4/134, H01M4/48,
H01M4/505, H01M4/525, H01M4/74, H01M4/80

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2015-153700 A (SUMITOMO ELECTRIC INDUSTRIES, LTD.) 24 August 2015, claims, example 1 (Family: none) | 1<br>2-5 |
| X<br>A | JP 2004-311349 A (HITACHI MAXELL, LTD.) 04 November 2004, claims, paragraphs [0015], [0021] (Family: none) | 1<br>2-5 |
| A | WO 2013/005358 A1 (TOYOTA INDUSTRIES CORPORATION) 10 January 2013, entire text (Family: none) | 1<br>2-5 |
| A | WO 2014/050569 A1 (NGK INSULATORS, LTD.) 03 April 2014, entire text (Family: none) | 1-5 |
| A | JP 2017-120746 A (HITACHI MAXELL, LTD.) 06 July 2017, entire text (Family: none) | 1-5 |

☐ Further documents are listed in the continuation of Box C.       ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 17 July 2019 (17.07.2019) | 30 July 2019 (30.07.2019) |

| Name and mailing address of the ISA/ | Authorized officer |
| --- | --- |
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**EP 3 796 425 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002151055 A